# EUROPÄISCHE PATENTSCHRIFT

(11) **EP 4 684 642 B1**
(45) Veröffentlichungstag und Bekanntmachung des Hinweises auf die Patenterteilung: **11.11.2026**
(21) Anmeldenummer: 25189225.3
(22) Anmeldetag: 14.07.2025
(51) Int. Cl.: A21C 9/08

(54) **VERFAHREN ZUM DIAGNOSTIZIEREN EINER STÖRUNG DES BETRIEBS EINER TEIGVERARBEITUNGSMASCHINE**
METHOD FOR DIAGNOSING A FAULT IN THE OPERATION OF A DOUGH PROCESSING MACHINE
PROCÉDÉ POUR DIAGNOSTIQUER UNE PERTURBATION DU FONCTIONNEMENT D'UNE MACHINE DE TRAITEMENT DE PÂTE

(30) Priorität: 26.07.2024 DE 102024121304
(43) Veröffentlichungstag der Anmeldung: 28.01.2026
(73) Patentinhaber: Fritsch Bakery Technologies GmbH & Co. KG, 97348 Markt Einersheim (DE)
(72) Erfinder: WÄGELE, Markus, 87763 Lautrach (DE); DORNER, Fred, 97318 Kitzingen (DE); EBERT, Thomas, 97337 Dettelbach (DE); LEHMEYER, Richard, 97516 Oberschwarzach (DE)
(74) Vertreter: Grünecker Patent- und Rechtsanwälte PartG mbB

(56) Entgegenhaltungen:
- CA-A1- 3 133 612
- DE-A1- 102015 224 432
- DE-A1- 102020 126 780
- DE-A1- 102021 108 139
- US-A1- 20240 008 496

## Beschreibung

Die Erfindung bezieht sich auf Verfahren zum Diagnostizieren von Störungen des Betriebs von Teigverarbeitungsmaschinen.

Es ist bekannt, den Betrieb von Teigverarbeitungsmaschinen durch verschiedene Sensoren oder ähnliche Systeme zu überwachen und Störungen des Betriebs zu erkennen. Aus der DE 10 2020 126 780 A1 ist eine Arbeitsmaschine mir Betriebszustandsanzeige bekannt, wobei die Betriebszustandsanzeige der Überwachung des Betriebs der Arbeitsmaschine und der Erkennung von Störungen dient. Als Beispiel für die Erzeugung von Betriebszustandsinformationen werden Sensoren genannt.

Manche Störungen des Betriebs von Teigverarbeitungsmaschinen äußern sich jedoch durch Phänomene, die durch Sensoren gar nicht oder nicht ausreichend erfassbar sind. Bspw. wird in der DE 10 2021 108 139 A1 offenbart, eine Ausdehnung und/oder Positionierung von Teigstücken auf einer Förderanordnung durch Lichtschranken zu erfassen. Als fehlerhaft eingestufte Teigstücke können aus dem Produktionsprozess entfernt werden. Das heißt, fehlerhafte Teigstücke werden zwar erkannt. Die Ursache für das Entstehen wird jedoch nicht erkannt. Das kann dazu führen, dass ein unerwünscht hoher Anteil an Teigstücken aussortiert wird.

Es ist eine Aufgabe der Erfindung, ein verbessertes Verfahren zum Diagnostizieren von Störungen des Betriebs von Teigverarbeitungsmaschinen anzugeben. Diese Aufgabe wird gelöst durch ein Verfahren mit den Merkmalen des Anspruchs 1.

Es wird ein Verfahren zum Diagnostizieren einer Störung des Betriebs einer Teigverarbeitungsmaschine, die eine Anzeigevorrichtung umfasst, offenbart. Das Verfahren umfasst ein Anzeigen einer Lokalisierungsansicht durch die Anzeigevorrichtung, wobei die Lokalisierungsansicht eine erste Lokalisierungseingabe eines Benutzers erfordert, und wobei die erste Lokalisierungseingabe einen Fehlerort lokalisiert, und ein Zusammenstellen einer Vergleichsansicht basierend auf der Lokalisierungseingabe des Benutzers, wobei die Vergleichsansicht eine oder mehrere Repräsentationen jeweils eines durch die Teigverarbeitungsmaschine bearbeitbaren Teigprodukts mit einem Fehler umfasst. Das Verfahren umfasst des Weiteren ein Anzeigen der Vergleichsansicht durch die Anzeigevorrichtung, wobei die Vergleichsansicht eine Vergleichsauswahl des Benutzers erfordert, und wobei die Vergleichsauswahl eine aus der einen oder mehreren Repräsentationen angibt. Des Weiteren umfasst das Verfahren ein Anzeigen mindestens eines Störungsbehebungsvorschlags basierend auf der Vergleichsauswahl durch die Anzeigevorrichtung.

Als Störung können Umstände angesehen werden, die dazu führen, dass ein Arbeitsergebnis der Teigverarbeitungsmaschine nicht optimal ausfällt. Darunter können Umstände verstanden werden, die eine sofortige Unterbrechung des Betriebs der Teigverarbeitungsmaschine erfordern. Als Störung können jedoch auch Umstände verstanden werden, die lediglich zu einem nicht optimalen Ergebnis führen, welches durch Behebung der Störung verbessert werden könnte. Z. B. könnte eine Störung zu einem Teigprodukt führen, das zwar noch weiterverarbeitungsfähig und/oder verkaufsfähig ist, aber durch Behebung der Störung noch optimiert werden könnte. Entsprechend können unter Störungsbehebungsvorschlägen Maßnahmen verstanden werden, welche eine Wiederaufnahme des Betriebs der Teigverarbeitungsmaschine nach einer durch eine Störung verursachten Betriebsunterbrechung und/oder eine Verbesserung und/oder Optimierung des Betriebs und/oder der Arbeitsergebnisse der Teigverarbeitungsmaschine bewirken können.

Durch die Berücksichtigung der ersten Lokalisierungseingabe und der Vergleichsauswahl des Benutzers kann eine Störungsursache genauer bestimmbar sein. Bei dem bereits erwähnten Beispiel der Erkennung von fehlerhaften Teigstücken kann z. B. der Benutzer durch die erste Lokalisierungseingabe angeben, an welcher Stelle eines aussortierten Teigstücks ein Fehler aufgetreten ist, bspw. anhand einer grafischen Darstellung eines durch die Teigverarbeitungsvorrichtung bearbeitbaren Teigstücks. Basierend auf der ersten Lokalisierungseingabe kann die Vergleichsansicht zusammengestellt werden, die z. B. grafische Darstellungen von fehlerhaften Teigstücken umfassen kann. Anschließend kann der Benutzer durch die Vergleichsauswahl die grafische Darstellung eines fehlerhaften Teigstücks angeben, welche dem aussortierten fehlerhaften Teigstück am nächsten kommt. Anhand der Lokalisierung und des Fehlerbilds kann die Störungsursache genau bestimmbar, zumindest aber genauer eingrenzbar sein.

Die vorstehend und im Folgenden beschriebenen Eingaben können auf unterschiedliche Art und Weise erfolgen. Z. B. ist es denkbar, dass die Anzeigevorrichtung ein Eingabeelement oder mehrere Eingabeelemente umfasst, die jeweils dazu konfiguriert sein können, Eingaben eines Benutzers zu empfangen. Als Eingabeelemente können bspw. Knöpfe, Hebel Tasten, Taster, Touchscreens, Kameras oder Mikrofone oder verschiedene Kombinationen der genannten angesehen werden. Die Eingabeelemente können dazu konfiguriert sein, auf unterschiedliche Art und Weise Benutzereingaben zu empfangen, bspw. durch mechanische Betätigung durch den Benutzer, Erfassen einer Berührung des Nutzers, Erfassen eines durch einen Benutzer erzeugten Tons, bspw. eines Sprachbefehls, oder durch Erfassen einer durch den Benutzer ausgeführten Geste.

Als ein durch die Teigverarbeitungsvorrichtung bearbeitbares Teigprodukt kann Teig in jeder Form angesehen werden, in welcher er während des Verarbeitungsprozesses vorkommt, z. B. können ein Teigstück, ein Teigstrang, ein Teigband oder jegliches Vor- oder Zwischenprodukt auf dem Weg von einer ungeformten Teigmasse zu einem verkaufsfertigen Teigprodukt als ein durch die Teigverarbeitungsmaschine bearbeitbares Teigprodukt angesehen werden.

Je nachdem welche Art von Lokalisierungseingabe die Lokalisierungsansicht erfordert, kann die Lokalisierungsansicht unterschiedlich gestaltet sein. Erfordert die Lokalisierungsansicht bspw. eine auf eine Maschinenkomponente der Teigverarbeitungsmaschine bezogene Lokalisierungseingabe, kann die Lokalisierungsansicht z. B. eine Lokalisierungsrepräsentation der Teigverarbeitungsmaschine oder einer von deren Komponenten umfassen. Eine Lokalisierungsrepräsentation der Teigverarbeitungsmaschine kann bspw. eine grafische Darstellung der Teigverarbeitungsmaschine und/oder Teilen davon und/oder eine textliche Beschreibung und/oder eine Liste textlicher Beschreibungen verschiedener Maschinenkomponenten umfassen.

Erfordert die Lokalisierungsansicht eine auf ein durch die Teigverarbeitungsmaschine bearbeitbares Teigprodukt bezogene Lokalisierungseingabe, kann die Lokalisierungsansicht z. B. eine Lokalisierungsrepräsentation des durch die Teigverarbeitungsmaschine bearbeitbaren Teigprodukts umfassen. Eine Lokalisierungsrepräsentation eines durch die Teigverarbeitungsmaschine bearbeitbaren Teigprodukts kann bspw. eine grafische Darstellung des Teigprodukts umfassen und/oder eine textliche Beschreibung und/oder eine Liste textlicher Beschreibungen des Teigprodukts und/oder verschiedener Teile davon umfassen.

Vorteilhafterweise kann jede der einen oder mehreren Repräsentationen eines durch die Teigverarbeitungsmaschine bearbeitbaren Teigprodukts mit einem Fehler eine grafische Darstellung jeweils eines durch die Teigverarbeitungsmaschine bearbeitbaren Teigprodukts mit einem Fehler umfassen. Alternativ oder zusätzlich kann jede der einen oder mehreren Repräsentationen eines durch die Teigverarbeitungsmaschine bearbeitbaren Teigprodukts mit einem Fehler eine Textbeschreibung jeweils eines durch die Teigverarbeitungsmaschine bearbeitbaren Teigprodukts mit einem Fehler umfassen.

Die Lokalisierungsansicht kann bspw. erfordern, dass die erste Lokalisierungseingabe eine auf eine Maschinenkomponente der Teigverarbeitungsmaschine bezogene Lokalisierungseingabe des Benutzers umfasst. Als eine auf eine Maschinenkomponente der Teigverarbeitungsmaschine bezogene Lokalisierungseingabe kann z.B. eine Angabe angesehen werden, an welcher Maschinenkomponente eine Störung und/oder ein fehlerhaftes Teigprodukt auftritt. Bspw. kann die Maschinenkomponente anhand einer grafischen Darstellung der Teigverarbeitungsmaschine oder durch Auswahl aus einer Liste angegeben werden.

Zusätzlich oder alternativ kann die Lokalisierungsansicht erfordern, dass die erste Lokalisierungseingabe eine auf ein durch die Teigverarbeitungsmaschine bearbeitbares Teigprodukt bezogene Lokalisierungseingabe des Benutzers umfasst. Als eine auf eine auf ein durch die Teigverarbeitungsmaschine bearbeitbares Teigprodukt bezogene Lokalisierungseingabe kann z. B. eine Angabe angesehen werden, wo an dem durch die Teigverarbeitungsmaschine bearbeitbaren Teigprodukt bzw. an welchem Fehlerort ein Fehler auftritt und/oder welche Art von Fehler auftritt.

Das Verfahren kann des Weiteren Anzeigen einer zweiten Lokalisierungsansicht durch die Anzeigevorrichtung umfassen, wobei die zweite Lokalisierungsansicht eine zweite Lokalisierungseingabe des Benutzers erfordern kann, und wobei die zweite Lokalisierungseingabe einen Fehlerort lokalisieren kann. Durch eine zweite Lokalisierungsansicht kann es z. B. ermöglicht werden, eine auf eine Maschinenkomponente der Teigverarbeitungsmaschine bezogene Lokalisierungseingabe und eine auf ein durch die Teigverarbeitungsmaschine bearbeitbares Teigprodukt bezogene Lokalisierungseingabe auf separate Lokalisierungsansichten zu verteilen. Bspw. kann bei einem Zusammenstellen der zweiten Lokalisierungsansicht die erste Lokalisierungseingabe berücksichtigt werden. Das Verfahren kann Zusammenstellen der zweiten Lokalisierungsansicht basierend auf der ersten Lokalisierungseingabe umfassen. In Ausführungen, in denen eine erste und eine zweite Lokalisierungseingabe erfordert wird, kann das Verfahren Zusammenstellen der Vergleichsansicht basierend auf der ersten und/oder der zweiten Lokalisierungseingabe umfassen.

Die zweite Lokalisierungsansicht kann erfordern, dass die zweite Lokalisierungseingabe eine auf eine Maschinenkomponente der Teigverarbeitungsmaschine und/oder auf ein durch die Teigverarbeitungsmaschine bearbeitbares Teigprodukt bezogene Lokalisierungseingabe des Benutzers umfasst. Bzgl. der auf eine Maschinenkomponente der Teigverarbeitungsmaschine und der auf ein durch die Teigverarbeitungsmaschine bearbeitbares Teigprodukt bezogenen Lokalisierungseingaben des Benutzers sind die obigen Erläuterungen mit Bezug auf die erste Lokalisierungseingabe analog anwendbar.

Das Verfahren kann des Weiteren Erfassen eines Ist-Wertes oder mehrerer Ist-Werte eines Betriebsparameters oder mehrerer Betriebsparameter der Teigverarbeitungsmaschine umfassen. Als Betriebsparameter können bspw. Abstände und/oder Fördergeschwindigkeiten verschiedener Fördervorrichtungen, oder einstellbare Abstände zwischen den Teigprodukten, bspw. Querabstände oder Längsabstände angesehen werden. Querabstände können quer, bspw. orthogonal, zu einer Produktionsrichtung, Längsabstände können im Wesentlichen parallel, bspw. parallel, zu der Produktionsrichtung definiert sein. Das Erfassen des Ist-Wertes des Betriebsparameters kann basierend auf der ersten und/oder der zweiten Lokalisierungseingabe und/oder basierend auf der Vergleichsauswahl erfolgen. Alternativ oder zusätzlich kann eine Auswahl, welcher Betriebsparameter erfasst wird, basierend auf der ersten und/oder der zweiten Lokalisierungseingabe und/oder basierend auf der Vergleichsauswahl erfolgen.

Besonders günstig kann es sein, wenn das Anzeigen des mindestens einen Störungsbehebungsvorschlags und/oder das Zusammenstellen der ersten oder zweiten Lokalisierungsansicht und/oder das Zusammenstellen der Vergleichsansicht basierend auf dem erfassten Ist-Wert des Betriebsparameters erfolgt.

Vorteilhafterweise kann das Anzeigen des mindestens einen Störungsbehebungsvorschlags Anzeigen des Ist-Wertes des Betriebsparameters umfassen. Das Anzeigen des Ist-Wertes im Rahmen des Anzeigens des Störungsbehebungsvorschlags kann basierend auf und/oder abhängig von der ersten und/oder der zweiten Lokalisierungseingabe und/oder basierend auf und/oder abhängig von der Vergleichsauswahl erfolgen.

Es kann vorteilhaft sein, wenn das Anzeigen des mindestens einen Störungsbehebungsvorschlags Anzeigen eines Änderungsvorschlags des Betriebsparameters umfasst. Bspw. kann der Änderungsvorschlag eine Erhöhung oder eine Reduzierung des Betriebsparameters und/oder einer Maschineneinstellung, welche den Betriebsparameter beeinflussen kann, umfassen.

Die Anmeldung bezieht sich auch auf eine Teigverarbeitungsmaschine, die zum Ausführen eines Verfahrens der vorstehend beschriebenen Art konfiguriert ist. Die Teigverarbeitungsmaschine umfasst eine Anzeigevorrichtung. Die Teigverarbeitungsmaschine kann des Weiteren ein Eingabeelement oder mehrere Eingabeelemente umfassen. Bspw. kann die Teigverarbeitungsmaschine, insbesondere die Anzeigevorrichtung, einen Berührungssensor umfassen, sodass die Anzeigevorrichtung als berührungsempfindliche Anzeige ausgeführt sein kann.

Die Teigverarbeitungsmaschine kann des Weiteren eine Verarbeitungseinheit umfassen. Die Verarbeitungseinheit kann mit der Anzeigevorrichtung verbunden sein. Die Verarbeitungseinheit kann dazu konfiguriert sein, mit der Anzeigevorrichtung derart zusammenzuwirken, dass die verschiedenen oben erläuterten Ansichten angezeigt werden. Des Weiteren kann die Verarbeitungseinheit dazu konfiguriert sein, das Zusammenstellen der verschiedenen Ansichten und/oder Vorschlägen ggf. basierend auf den verschiedenen Eingaben und/oder Auswahlen auszuführen. Zusätzlich kann die Verarbeitungseinheit dazu konfiguriert sein, den einen oder die mehreren Betriebsparameter zu erfassen und/oder Signale zu empfangen, die durch andere Komponenten der Teigverarbeitungsmaschine erfasste Betriebsparameter repräsentieren. Außerdem kann die Verarbeitungseinheit dazu konfiguriert sein, Maschineneinstellungen zu ändern und/oder Signale zu erzeugen, die andere Komponenten der Teigverarbeitungsmaschine zu einer Veränderung von Maschineneinstellungen veranlassen, bspw. basierend auf einer Auswahleingabe des Benutzers, die eine Auswahl eines Störungsbehebungsvorschlags angeben kann. Die Verarbeitungseinheit kann z. B. einen Computer umfassen. Die Verarbeitungseinheit kann in eine Steuerungseinheit der Teigverarbeitungsmaschine integriert sein.

Die Erfindung bezieht sich auf ein Verfahren zum Diagnostizieren einer Störung des Betriebs einer Teigverarbeitungsmaschine der vorstehend beschriebenen Art. Im Folgenden wird eine vorteilhafte Ausführung beispielhaft anhand von Zeichnungen näher erläutert.
Figur 1 zeigt eine schematische Seitenansicht einer Teigverarbeitungsmaschine.
Figur 2 zeigt eine schematische Ansicht einer Anzeigevorrichtung der Teigverarbeitungsmaschine aus Figur 1, welche eine erste Lokalisierungsansicht gemäß einem ersten Ausführungsbeispiel anzeigt.
Figur 3 zeigt eine schematische Ansicht einer Anzeigevorrichtung der Teigverarbeitungsmaschine aus Figur 1, welche eine erste Lokalisierungsansicht gemäß einem zweiten Ausführungsbeispiel anzeigt.
Figur 4 zeigt eine schematische Ansicht einer Anzeigevorrichtung der Teigverarbeitungsmaschine aus Figur 1, welche eine zweite Lokalisierungsansicht anzeigt.
Figur 5 zeigt eine schematische Ansicht einer Anzeigevorrichtung der Teigverarbeitungsmaschine aus Figur 1, welche eine Vergleichsansicht anzeigt.
Figur 6 zeigt eine schematische Ansicht einer Anzeigevorrichtung der Teigverarbeitungsmaschine aus Figur 1, welche einen Störungsbehebungsvorschlag anzeigt.

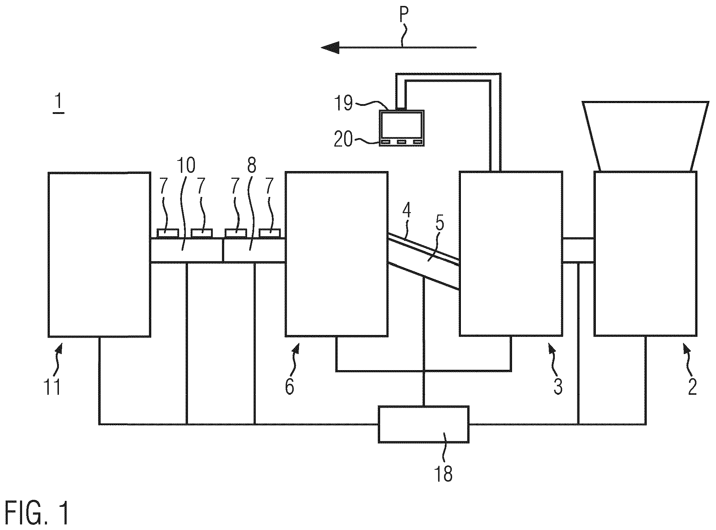

In Figur 1 ist eine schematische Seitenansicht einer Teigverarbeitungsmaschine 1 dargestellt. Die folgenden Erläuterungen zu Komponenten der Teigmaschine 1 sind rein beispielhaft zu verstehen. Das erfindungsgemäße Verfahren kann auf beliebige Arten von Teigverarbeitungsmaschinen anwendbar sein. Die Teigverarbeitungsmaschine 1 kann mehrere Stationen umfassen. Zwischen den Stationen kann Teig durch verschiedene Fördereinrichtungen förderbar sein. Zu Beginn der Teigverarbeitung kann Teig in eine Portionierstation 2 eingefüllt werden. Die Teigverarbeitungsmaschine 1 kann die Portionierstation 2 umfassen. Die Portionierstation 2 kann dazu eingerichtet sein, die eingefüllte Teigmasse in Portionen, die eine gewünschte Masse aufweisen, zu teilen. Dadurch kann ermöglicht werden, dass eine genau definierte Masse von Teig durch die Teigverarbeitungsmaschine 1 verarbeitet wird.

Die Teigverarbeitungsmaschine 1 kann des Weiteren eine Teigbandformstation 3 aufweisen. Die Teigbandformstation 3 kann dazu konfiguriert sein, aus einem im Wesentlichen ungeformten Strang aus Teigportionen ein Teigband 4 zu formen. Es kann einen Förderer 5 vorgesehen sein. Auf dem Förderer 5 kann das Teigband 4 abgelegt werden. Der Förderer 5 kann dazu konfiguriert sein, Teig, insbesondere das Teigband 4, in einer Produktionsrichtung P zu fördern. Stromabwärts der Teigbandformstation 3 können, wie im Ausführungsbeispiel dargestellt, weitere Stationen zur Verarbeitung des fertiggeformten Teigbands 4 vorgesehen sein.

Wie in Figur 1 dargestellt, kann die Teigverarbeitungsmaschine 1 eine erste Arbeitsstation 6 umfassen. Wie im Ausführungsbeispiel gezeigt kann die erste Arbeitsstation 6 als Schneidstation ausgeführt sein. Die erste Arbeitsstation 6 kann dazu konfiguriert sein, das Teigband 4 in Teigstücke 7 aufzuteilen. Die Teigstücke 7 können von der Schneidstation 6 aus weitergefördert werden, bspw. durch eine Fördervorrichtung 8.

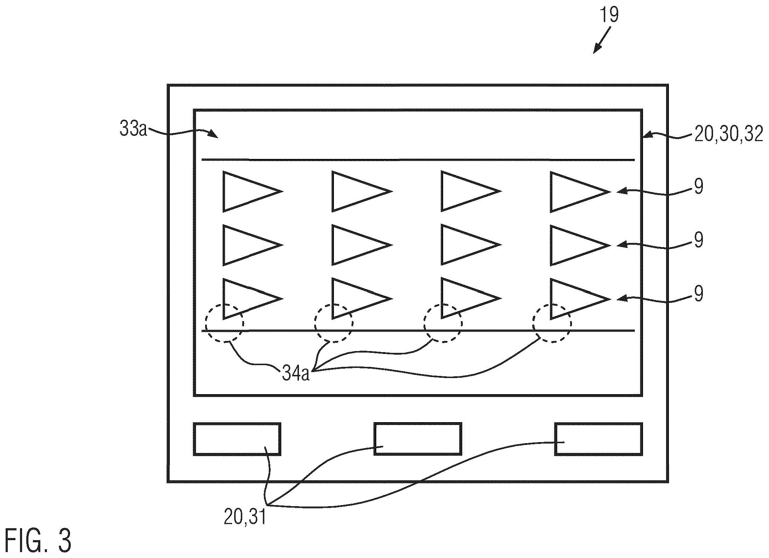

Die Fördervorrichtung 8 kann dazu konfiguriert sein, die Teigstücke 7 zu fördern. Zusätzlich kann die Fördervorrichtung 8 dazu konfiguriert sein, einen Querabstand zwischen Spuren 9 (s. Figur 3) von Teigstücken 7 einzustellen, bspw. durch mehrere einzelne Förderer, die jeweils eine Spur 9 fördern. Die Fördervorrichtung 8 kann dazu konfiguriert sein, die im Querabstand eingestellten Teigstücke 7 an den Förderer 10 zu übergeben. Der Förderer 10 kann dazu konfiguriert sein, die Teigstücke 7 zu einer zweiten Arbeitsstation 11 zu fördern. Die zweite Arbeitsstation kann dazu konfiguriert sein, die Teigstücke 7 weiter zu verarbeiten. Z. B. kann die zweite Arbeitsstation als Füllstation oder als Wickelstation ausgeführt sein.

Die Teigverarbeitungsmaschine 1 kann ferner eine Steuereinheit 18 umfassen. Die Darstellung der Steuereinheit 18 und ihrer Verbindungen in Figur 1 ist schematisch zu verstehen. Die Steuereinheit kann in einer beliebigen Komponente der Teigverarbeitungsmaschine 1 oder einer der Arbeitsstationen angeordnet sein, Sie kann jedoch auch separat von den übrigen Komponenten der Teigverarbeitungsmaschine 1 vorgesehen sein. Die Steuereinheit 18 kann dazu konfiguriert sein, die in der Teigverarbeitungsmaschine 1 ablaufenden Prozesse und die Komponenten der Teigverarbeitungsmaschine zu steuern und/oder zu überwachen. Außerdem kann die Teigverarbeitungsmaschine 1 eine Anzeigevorrichtung 19 umfassen. Die Anzeigevorrichtung kann Eingabeelementen 20 umfassen und dazu eingerichtet sein, Prozessabläufe in der Teigverarbeitungsmaschine 1 für bzw. durch einen Bediener zu visualisieren bzw. zu beeinflussen.

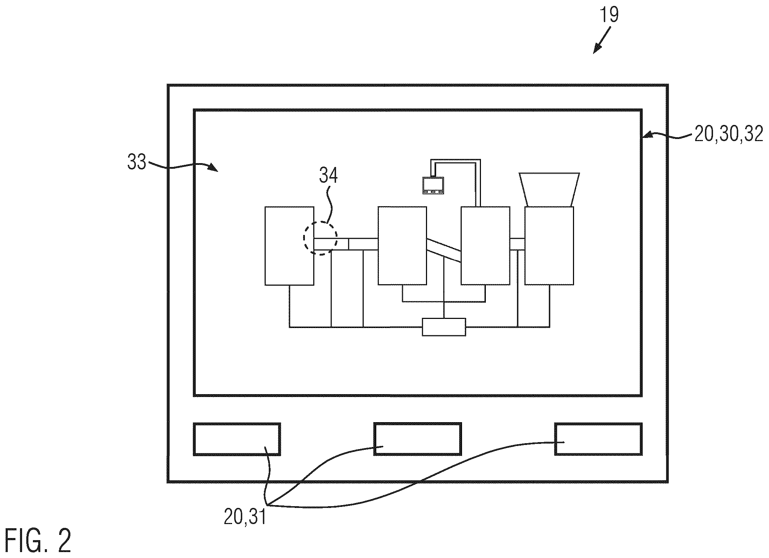

In Figur 2 ist die Anzeigevorrichtung 19 schematisch dargestellt. Wie in Figur 2 gezeigt, kann die Anzeigevorrichtung 19 ein Display 30 umfassen. Des Weiteren kann die Anzeigevorrichtung die Eingabeelemente 20 umfassen. Wie in Figur 2 dargestellt, können die Eingabeelemente 20 in Form von Tasten 31 vorgesehen sein. Alternativ oder zusätzlich kann ein Eingabeelement 20 in Form eines berührungsempfindlichen Displays oder Touchscreens 32 vorgesehen sein. In Figur 2 zeigt die Anzeigevorrichtung 19 eine Lokalisierungsansicht 33 gemäß einem ersten Ausführungsbeispiel an. Die Lokalisierungsansicht 33 kann eine erste Lokalisierungseingabe 34 eines Benutzers erfordern.

Die erste Lokalisierungseingabe 34 kann einen Fehlerort lokalisieren. Z. B. kann die erste Lokalisierungseingabe 34, wie in Figur 2 dargestellt, eine auf eine Maschinenkomponente der Teigverarbeitungsmaschine 1 bezogene Lokalisierungseingabe des Benutzers umfassen. Wie im vorliegenden Beispiel, kann die erste Lokalisierungseingabe 34 auf den Förderer 10 bezogen sein. Dadurch kann der Fehlerort relativ zu dem Förderer 10 lokalisiert werden. Z. B. kann durch die erste Lokalisierungseingabe 34 angegeben werden, dass auf dem Förderer 10 ein Fehler, bspw. ein fehlerhaftes Teigstück 7, auftritt.

In Figur 3 ist erneut eine schematische Ansicht der Anzeigevorrichtung 19 dargestellt. In Figur 3 zeigt die Anzeigevorrichtung 19 eine Lokalisierungsansicht 33a gemäß einem zweiten Ausführungsbeispiel. Auch die Lokalisierungsansicht 33a kann eine erste Lokalisierungseingabe 34a eines Benutzers erfordern. Auch die erste Lokalisierungseingabe 34a gemäß dem in Figur 3 dargestellten Ausführungsbeispiel kann einen Fehlerort lokalisieren, z. B. kann sie eine auf eine Maschinenkomponente der Teigverarbeitungsmaschine 1 bezogene Lokalisierungseingabe des Benutzers umfassen, bspw. eine auf den Förderer 10 bezogene Lokalisierungseingabe. Gemäß dem in Figur 3 dargestellten Ausführungsbeispiel kann der Fehlerort etwas genauer lokalisiert werden. Z. B. kann die erste Lokalisierungseingabe 34a angeben, welche der Spuren 9 von dem Fehler betroffen ist.

Es sollte klar sein, dass die Lokalisierungsansicht 33 gemäß dem in Figur 2 dargestellten Ausführungsbeispiel und die Lokalisierungsansicht 33a gemäß dem in Figur 3 dargestellten Ausführungsbespiel jeweils zusammen mit den jeweiligen ersten Lokalisierungseingaben 34, 34a alternativ oder zusätzlich zueinander vorgesehen sein können. Auch die im Folgenden erläuterten Verfahrensschritte können in Kombination mit einer der Lokalisierungsansichten 33, 33a oder in Kombination mit beiden vorgesehen sein.

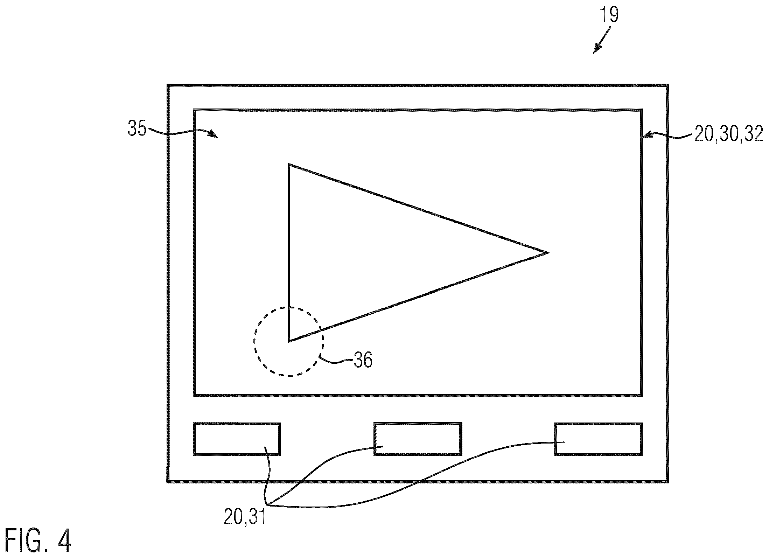

Basierend auf der ersten Lokalisierungseingabe 34, 34a kann eine zweite Lokalisierungsansicht 35 zusammengestellt werden. In Figur 4 ist erneut eine schematische Ansicht der Anzeigevorrichtung 19 dargestellt. In Figur 4 zeigt die Anzeigevorrichtung 19 die zweite Lokalisierungsansicht 35 an. Die zweite Lokalisierungsansicht 35 kann eine zweite Lokalisierungseingabe 36 eines Benutzers erfordern. Die zweite Lokalisierungseingabe 36 kann den Fehlerort lokalisieren und/oder weiter eingrenzen. Z. B. kann die zweite Lokalisierungseingabe 36 eine auf ein durch die Teigverarbeitungsmaschine 1 bearbeitbares Teigprodukt bezogene Lokalisierungseingabe des Benutzers umfassen. Wie im vorliegenden Beispiel, kann die zweite Lokalisierungseingabe 36 auf das Teigstück 7 bezogen sein. Dadurch kann der Fehlerort relativ zu dem Teigstück 7 lokalisiert werden. Z. B. kann durch die zweite Lokalisierungseingabe 36 angegeben werden, dass an einer unteren Ecke des Teigstücks 7 ein Fehler auftritt. Dies kann, wie in Figur 3 gezeigt, durch eine Berührung des Touchscreens an der Stelle erfolgen, an der sich der Fehlerort in einer angezeigten grafischen Darstellung der des Teigstücks 7 oder eines anderen Teigprodukts befindet.

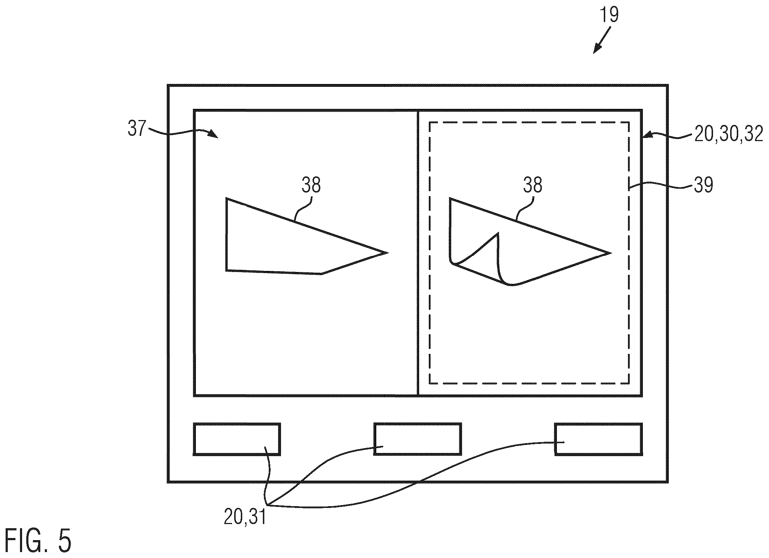

Basierend auf der ersten Lokalisierungseingabe 34, 34a und/oder der zweiten Lokalisierungseingabe 36 kann eine Vergleichsansicht 37 zusammengestellt werden. In Figur 5 ist erneut eine schematische Ansicht der Anzeigevorrichtung 19 dargestellt. In Figur 5 zeigt die Anzeigevorrichtung 19 die Vergleichsansicht 37. Die Vergleichsansicht 37 kann eine oder mehrere (in Figur 5 sind zwei dargestellt) Repräsentationen 38 jeweils eines durch die Teigverarbeitungsmaschine 1 bearbeitbaren Teigprodukts mit einem Fehler umfassen. Wie im vorliegenden Ausführungsbeispiel, können die Repräsentationen 38 jeweils eine grafische Darstellung eines durch die Teigverarbeitungsmaschine 1 bearbeitbaren Teigstücks 7 oder eines anderen Teigprodukts mit einem Fehler umfassen. Die Vergleichsansicht 37 kann eine Vergleichsauswahl 39 des Benutzers erfordern. Der Benutzer kann die verschiedenen Repräsentationen 38 mit dem ihm vorliegenden fehlerhaften Teigstück 7 und/oder anderen Teigprodukt vergleichen und durch die Vergleichsauswahl 39 angeben, welche der Repräsentationen 38 dem fehlerhaften Teigstück 7 und/oder anderen Teigprodukt am nächsten kommt.

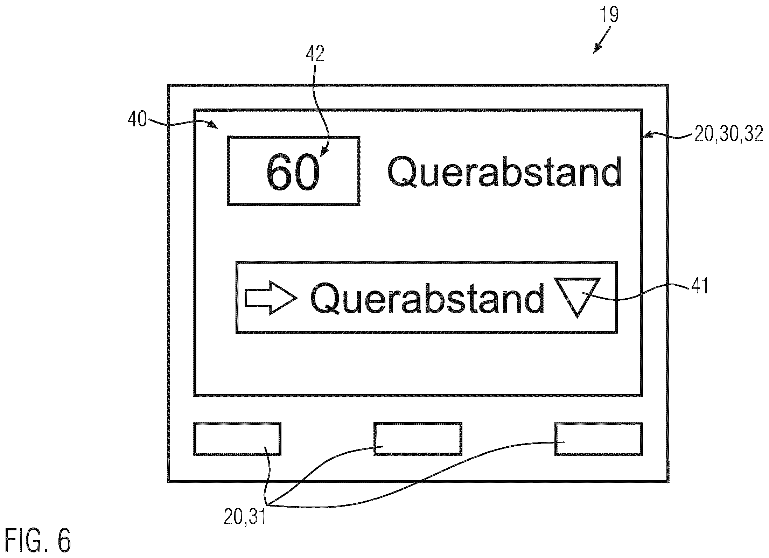

Basierend auf der Vergleichsauswahl 39 kann ein Störungsbehebungsvorschlag 40 angezeigt werden. In Figur 6 ist erneut eine schematische Ansicht der Anzeigevorrichtung 19 dargestellt. In Figur 6 zeigt die Anzeigevorrichtung 19 den Störungsbehebungsvorschlag 40 an. Wie im vorliegenden Ausführungsbeispiel gezeigt, kann das Anzeigen des Störungsbehebungsvorschlags 40 ein Anzeigen eines Änderungsvorschlags 41 eines Betriebsparameters umfassen. In Figur 6 ist als Betriebsparameter beispielhaft ein Querabstand dargestellt. Der Änderungsvorschlag 41 kann, wie in Figur 6 ebenfalls beispielhaft dargestellt, eine Grafik umfassen, die einem Benutzer signalisiert, dass der Querabstand reduziert werden sollte. Wie in Figur 6 ebenfalls dargestellt, kann das Anzeigen des Störungsbehebungsvorschlags 40 zusätzlich Anzeigen eines Ist-Wertes 42 des Betriebsparameters umfassen. Entsprechend kann das Verfahren ein Erfassen des Ist-Wertes 42 des Betriebsparameters, im vorliegenden Ausführungsbeispiel des aktuell eingestellten Querabstands, umfassen. Es kann vorteilhaft sein, wenn der erfasste Ist-Wert 42 bei der Zusammenstellung des Störungsbehebungsvorschlags 41 berücksichtigt wird.

## Patentansprüche

1. Verfahren zum Diagnostizieren einer Störung des Betriebs einer Teigverarbeitungsmaschine (1), die eine Anzeigevorrichtung (19) umfasst, **dadurch gekennzeichnet, dass** das Verfahren umfasst:
Anzeigen einer Lokalisierungsansicht (33, 33a) durch die Anzeigevorrichtung (19), wobei die Lokalisierungsansicht (33, 33a) eine erste Lokalisierungseingabe (34, 34a) eines Benutzers erfordert, und wobei die erste Lokalisierungseingabe (34, 34a) einen Fehlerort lokalisiert, Zusammenstellen einer Vergleichsansicht (37) basierend auf der ersten Lokalisierungseingabe (34, 34a) des Benutzers, wobei die Vergleichsansicht (37) eine oder mehrere Repräsentationen (38) jeweils eines durch die Teigverarbeitungsmaschine (1) bearbeitbaren Teigprodukts (7) mit einem Fehler umfasst,
Anzeigen der Vergleichsansicht (37) durch die Anzeigevorrichtung (19), wobei die Vergleichsansicht (37) eine Vergleichsauswahl (39) des Benutzers erfordert, und wobei die Vergleichsauswahl (39) eine aus der einen oder mehreren Repräsentationen (38) angibt, Anzeigen mindestens eines Störungsbehebungsvorschlags (40) basierend auf der Vergleichsauswahl (39) durch die Anzeigevorrichtung.

2. Verfahren nach Anspruch 1, wobei jede der einen oder mehreren Repräsentationen (38) eine grafische Darstellung und/oder eine Textbeschreibung jeweils eines durch die Teigverarbeitungsmaschine (1) bearbeitbaren Teigprodukts (7) mit einem Fehler umfasst.

3. Verfahren nach Anspruch 1 oder 2, wobei die Lokalisierungsansicht (33, 33a) erfordert, dass die erste Lokalisierungseingabe (34, 34a) eine auf eine Maschinenkomponente der Teigverarbeitungsmaschine (1) bezogene Lokalisierungseingabe des Benutzers umfasst.

4. Verfahren nach einem der vorangehenden Ansprüche, wobei die Lokalisierungsansicht (33, 33a) erfordert, dass die erste Lokalisierungseingabe (34, 34a) eine auf ein durch die Teigverarbeitungsmaschine (1) bearbeitbares Teigprodukt (7) bezogene Lokalisierungseingabe des Benutzers umfasst.

5. Verfahren nach einem der vorangehenden Ansprüche, des Weiteren umfassend Anzeigen einer zweiten Lokalisierungsansicht (35) durch die Anzeigevorrichtung (19), wobei die zweite Lokalisierungsansicht (35) eine zweite Lokalisierungseingabe (36) des Benutzers erfordert, und wobei die zweite Lokalisierungseingabe (36) einen Fehlerort lokalisiert.

6. Verfahren nach Anspruch 5, wobei die zweite Lokalisierungsansicht (35) erfordert, dass die zweite Lokalisierungseingabe (36) eine auf eine Maschinenkomponente der Teigverarbeitungsmaschine (1) und/oder auf ein durch die Teigverarbeitungsmaschine (1) bearbeitbares Teigprodukt (7) bezogene Lokalisierungseingabe des Benutzers umfasst.

7. Verfahren nach Anspruch 5 oder 6, wobei das Verfahren des Weiteren Zusammenstellen der zweiten Lokalisierungsansicht (35) basierend auf der ersten Lokalisierungseingabe (34, 34a) umfasst.

8. Verfahren nach einem der vorangehenden Ansprüche, des Weiteren umfassend Erfassen eines Ist-Wertes (42) eines Betriebsparameters der Teigverarbeitungsmaschine (1).

9. Verfahren nach Anspruch 8, wobei das Anzeigen des mindestens einen Störungsbehebungsvorschlags (40) basierend auf dem erfassten Ist-Wert (42) des Betriebsparameters erfolgt.

10. Verfahren nach Anspruch 8 oder 9, wobei das Anzeigen des mindestens einen Störungsbehebungsvorschlags (40) Anzeigen des Ist-Wertes (42) des Betriebsparameters umfasst.

11. Verfahren nach einem der Ansprüche 8 bis 10, wobei das Anzeigen des mindestens einen Störungsbehebungsvorschlags (40) Anzeigen eines Änderungsvorschlags (41) des Betriebsparameters umfasst.

12. Teigverarbeitungsmaschine (1), die zum Ausführen eines Verfahrens nach einem der vorangehenden Ansprüche konfiguriert ist.

## Claims

1. A method for diagnosing a fault in the operation of a dough processing machine (1) comprising a display device (19), **characterized in that** the method comprises:
displaying a localization view (33, 33a) by means of the display device (19), wherein the localization view (33, 33a) requires a first localization input (34, 34a) of a user, and wherein the first localization input (34, 34a) locates a fault location,
assembling a comparison view (37) based on the first localization input (34, 34a) of the user, wherein the comparison view (37) comprises one or more representations (38), each of a dough product (7) processable by the dough processing machine (1) and having a defect,
displaying the comparison view (37) by means of the display device (19), wherein the comparison view (37) requires a comparison selection (39) of the user, and wherein the comparison selection (39) indicates one of the one or more representations (38),
displaying at least one suggestion for remedying the fault (40) based on the comparison selection (39) by means of the display device.

2. The method according to claim 1, wherein each of the one or more representations (38) comprises a graphical representation and/or a textual description, in each case of a dough product (7) processable by the dough processing machine (1) and having a defect.

3. The method according to claim 1 or 2, wherein the localization view (33, 33a) requires the first localization input (34, 34a) to comprise a localization input of the user relating to a machine component of the dough processing machine (1).

4. The method according to any one of the preceding claims, wherein the localization view (33, 33a) requires the first localization input (34, 34a) to comprise a localization input of the user relating to a dough product (7) processable by the dough processing machine (1).

5. The method according to any one of the preceding claims, further comprising displaying a second localization view (35) by means of the display device (19), wherein the second localization view (35) requires a second localization input (36) of the user, and wherein the second localization input (36) locates a fault location.

6. The method according to claim 5, wherein the second localization view (35) requires the second localization input (36) to comprise a localization input of the user relating to a machine component of the dough processing machine (1) and/or to a dough product (7) processable by the dough processing machine (1).

7. The method according to claim 5 or 6, wherein the method further comprises assembling the second localization view (35) based on the first localization input (34, 34a).

8. The method according to any one of the preceding claims, further comprising acquiring an actual value (42) of an operating parameter of the dough processing machine (1).

9. The method according to claim 8, wherein the displaying of the at least one suggestion for remedying the fault (40) is based on the acquired actual value (42) of the operating parameter.

10. The method according to claim 8 or 9, wherein the displaying of the at least one suggestion for remedying the fault (40) comprises displaying the actual value (42) of the operating parameter.

11. The method according to any one of claims 8 to 10, wherein the displaying of the at least one suggestion for remedying the fault (40) comprises displaying a change suggestion (41) of the operating parameter.

12. Adough processing machine (1) configured to carry out a method according to any one of the preceding claims.

## Revendications

1. Procédé pour diagnostiquer une perturbation du fonctionnement d'une machine de traitement de pâte (1) comprenant un dispositif d'affichage (19), **caractérisé en ce que** le procédé comprend :
l'affichage d'une vue de localisation (33, 33a) au moyen du dispositif d'affichage (19), dans lequel la vue de localisation (33, 33a) requiert une première entrée de localisation (34, 34a) d'un utilisateur, et dans lequel la première entrée de localisation (34, 34a) localise un emplacement du défaut,
la constitution d'une vue de comparaison (37) sur la base de la première entrée de localisation (34, 34a) de l'utilisateur, dans lequel la vue de comparaison (37) comprend une ou plusieurs représentations (38), chacune d'un produit de pâte (7) pouvant être traité par la machine de traitement de pâte (1) et présentant un défaut,
l'affichage de la vue de comparaison (37) au moyen du dispositif d'affichage (19), dans lequel la vue de comparaison (37) requiert une sélection de comparaison (39) de l'utilisateur, et dans lequel la sélection de comparaison (39) indique l'une parmi la ou les représentations (38),
l'affichage d'au moins une proposition de remédiation à la perturbation (40) sur la base de la sélection de comparaison (39) au moyen du dispositif d'affichage.

2. Procédé selon la revendication 1, dans lequel chacune de la ou des représentations (38) comprend une représentation graphique et/ou une description textuelle, respectivement d'un produit de pâte (7) pouvant être traité par la machine de traitement de pâte (1) et présentant un défaut.

3. Procédé selon la revendication 1 ou 2, dans lequel la vue de localisation (33, 33a) requiert que la première entrée de localisation (34, 34a) comprenne une entrée de localisation de l'utilisateur se rapportant à un composant de machine de la machine de traitement de pâte (1).

4. Procédé selon l'une quelconque des revendications précédentes, dans lequel la vue de localisation (33, 33a) requiert que la première entrée de localisation (34, 34a) comprenne une entrée de localisation de l'utilisateur se rapportant à un produit de pâte (7) pouvant être traité par la machine de traitement de pâte (1).

5. Procédé selon l'une quelconque des revendications précédentes, comprenant en outre l'affichage d'une seconde vue de localisation (35) au moyen du dispositif d'affichage (19), dans lequel la seconde vue de localisation (35) requiert une seconde entrée de localisation (36) de l'utilisateur, et dans lequel la seconde entrée de localisation (36) localise un emplacement du défaut.

6. Procédé selon la revendication 5, dans lequel la seconde vue de localisation (35) requiert que la seconde entrée de localisation (36) comprenne une entrée de localisation de l'utilisateur se rapportant à un composant de machine de la machine de traitement de pâte (1) et/ou à un produit de pâte (7) pouvant être traité par la machine de traitement de pâte (1).

7. Procédé selon la revendication 5 ou 6, dans lequel le procédé comprend en outre la constitution de la seconde vue de localisation (35) sur la base de la première entrée de localisation (34, 34a).

8. Procédé selon l'une quelconque des revendications précédentes, comprenant en outre l'acquisition d'une valeur réelle (42) d'un paramètre de fonctionnement de la machine de traitement de pâte (1).

9. Procédé selon la revendication 8, dans lequel l'affichage de l'au moins une proposition de remédiation à la perturbation (40) est effectué sur la base de la valeur réelle acquise (42) du paramètre de fonctionnement.

10. Procédé selon la revendication 8 ou 9, dans lequel l'affichage de l'au moins une proposition de remédiation à la perturbation (40) comprend l'affichage de la valeur réelle (42) du paramètre de fonctionnement.

11. Procédé selon l'une quelconque des revendications 8 à 10, dans lequel l'affichage de l'au moins une proposition de remédiation à la perturbation (40) comprend l'affichage d'une proposition de modification (41) du paramètre de fonctionnement.

12. Machine de traitement de pâte (1) configurée pour mettre en œuvre un procédé selon l'une quelconque des revendications précédentes.
